# EUROPEAN PATENT APPLICATION

(11) **EP 1 944 185 A2**
(43) Date of publication of application: **16.07.2008**
(21) Application number: 08000501.0
(22) Date of filing: 11.01.2008
(51) Int. Cl.: B60K 6/40, B60K 6/48

(54) **Vehicle drive device**

(30) Priority: 11.01.2007 JP 2007003831
(71) Applicant: Hitachi, Ltd., Chiyoda-ku Tokyo 100-8280 (JP)
(72) Inventor: Yamamoto, Daisuke, Chiyoda-ku Tokyo 100-8220 (JP); Hamai, Kyugo, Chiyoda-ku Tokyo 100-8220 (JP)
(74) Representative: Beetz & Partner

(57) **Abstract**

The invention relates to a vehicle drive device with a simple parts construction and improved maintainability is to be provided.

Power of an internal combustion engine 10 as a first drive source is transmitted to a differential gear of a drive force transducer 40 by a propeller shaft 30. Power of an electric motor 50 as a second drive source is transmitted to the differential gear of the driving force transducer 40. The electric motor 50 is constituted separately from the differential gear. A rotor shaft of the electric motor 50 is disposed in an area opposite to the propeller shaft and on a rear side of the differential gear. A spline bearing S1 is used as means for connecting and engaging the electric motor 50 with the differential gear.

## Description

### BACKGROUND OF THE INVENTION

### 1. Field of the Invention

The present invention relates to a vehicle drive device in a hybrid vehicle which uses two or more drive sources as vehicle drive sources.

### 2. Description of the Related Art

There is a type of hybrid vehicle which mounts thereon both an internal combustion engine (engine) and an electric motor (motor generator). Concerning such a hybrid vehicle, technologies have been disclosed in which the internal combustion engine is disposed on a front side of the vehicle and the electric motor on a rear side of the vehicle in such a way that the front-rear balance of the vehicle can be achieved by disposing each drive source, heavy components, appropriately (see, for example, JP-A-2006-103535).

Also another known hybrid vehicle has such a configuration that the internal combustion engine is disposed on a front side of the vehicle and the electric motor is disposed interlockedly on a rear side of power transfer of a ring gear in a differential gear unit including the differential case itself, i.e., on a downstream side of a differential case in a flow of power transfer (see, for example, JP-A-2003-2916710).

### SUMMARY OF THE INVENTION

However, as described in JP-A-2006-103535, if the electric motor is disposed more forward than wheel axles, it is necessary to use an electric motor which uses, for example, a hollow shaft in order to prevent interference between a propeller shaft which transfers power from the internal combustion engine and the electric motor, thus giving rise to the problem that the parts construction becomes complicated and the size of the electric motor increases.

In the vehicle drive device described in JP-A-2003-2916710, the electric motor is rendered integral with the differential gear unit. More specifically, as described in the paragraph 0038 of JP-A-2003-2916710, a rotary gear 16 is rendered integral with a ring gear 26 which constitutes a differential gear unit 15 and a gear 21 is rendered integral with an output shaft 34 of a motor 23. The rotary gear 16 and the gear 21 are connected together through gears 19, 20 and 21, with the result that the motor 23 is rendered integral with the differential gear unit 15. Thus, since the electric motor is rendered integral with the differential gear unit, it is impossible to remove only the electric motor, and maintainability is thus poor.

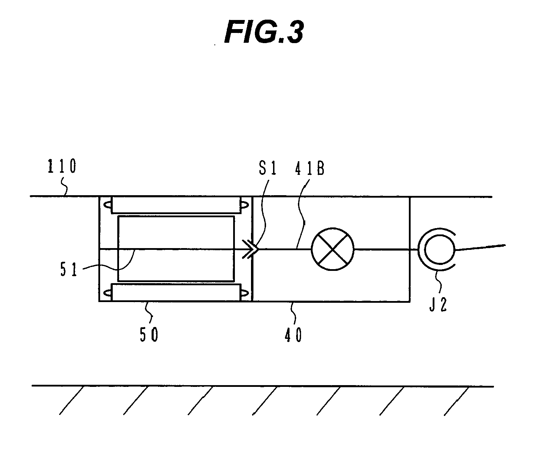

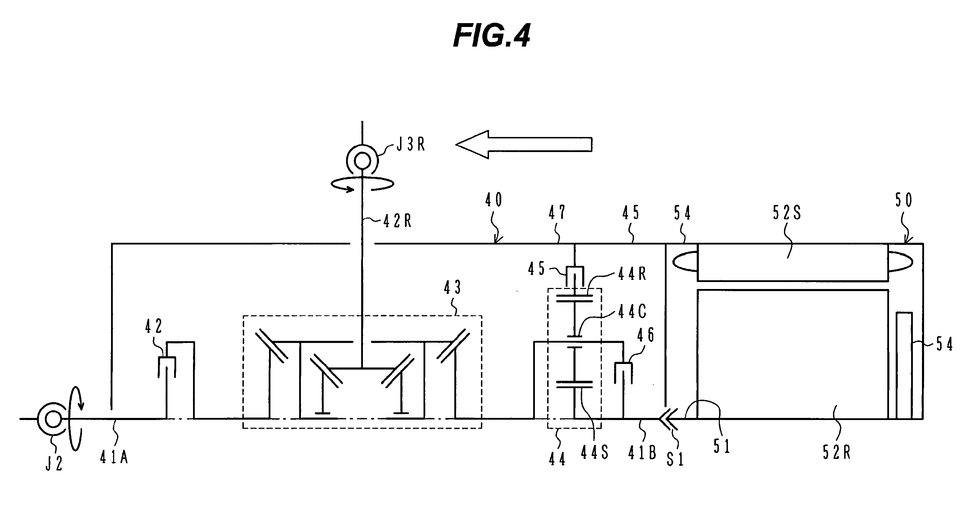

Further, in the vehicle drive device as described in JP-A-2003-2916710 wherein the electric motor is disposed interlockedly on a downstream side of a differential case including the differential case itself in the flow of power transfer, an electric motor which employs a hollow shaft may be used, as shown in Figs. 3 and 4. Thus, according to JP-A-2003-2916710 wherein the electric motor is disposed interlockedly on a downstream side of a differential case including the differential case itself in the flow of power transfer, not only does the parts construction become complicated, but also the size of the electric motor increases as in the example of Figs. 3 and 4.

It is an object of the present invention to provide a vehicle drive device with a simple parts construction and improved maintainability.
(1) To achieve the above-mentioned object, the present invention provides a vehicle drive device mounted on a hybrid vehicle wherein power transmitted from a first drive source through a propeller shaft and power transmitted from a second drive source are distributed to right and left shafts through a differential gear to drive right and left wheels, the vehicle drive device comprising at least one electric motor which constitutes the second drive source and/or a connecting mechanism for connection between an output shaft of the electric motor and an input shaft of the differential gear. The electric motor may be provided as a separate component from the differential gear and disposed in an area opposite to the propeller shaft and on a rear side of the differential gear.
   According to this construction, not only is the parts construction simple, but also maintainability is improved.
(2) In the above (1), preferably, the output shaft of the electric motor is disposed perpendicularly to a drive shaft extending from the differential gear.
(3) In the above (1), preferably, the vehicle drive device further comprises a first clutch, the first clutch being disposed between the propeller shaft and the differential gear and capable of transferring and cutting off power.
(4) In the above (1), preferably, the vehicle drive device further comprises a second clutch, the second clutch being disposed between the electric motor and the differential gear and capable of transferring and cutting off power.
(5) In the above (1), preferably, the vehicle drive device further comprises a reduction mechanism, the reduction mechanism being disposed between the electric motor and the differential gear to increase or decrease torque/revolution.
(6) In the above (5), preferably, the reduction mechanism has a shifting function of changing a gear ratio.
(7) In the above (1), preferably, the connecting mechanism is a spline bearing or a constant velocity joint.
(8) To achieve the above object, the present invention also provides a vehicle drive device mounted on a hybrid vehicle wherein power transmitted from a first drive source through a propeller shaft and power transmitted from a second drive source are distributed to right and left shafts through a differential gear to drive right and left wheels, the vehicle drive device comprising at least one electric motor which constitutes the second drive source and/or a connecting mechanism for connection between an output shaft of the electric motor and an input shaft of the differential gear. The electric motor may be provided as a separate component from the differential gear and disposed on a rear side of the differential gear.
   According to this construction, not only is the parts construction simple, but also maintainability is improved.
(9) To achieve the above object, the present invention further provides a vehicle drive device mounted on a hybrid vehicle wherein power transmitted from a first drive source through a propeller shaft and power transmitted from a second drive source are distributed to right and left shafts through a differential gear to drive right and left wheels, the vehicle drive device comprising at least one electric motor which constitutes the second drive source, a connecting mechanism for connection between an output shaft of the electric motor and an input shaft of the differential gear, and/or a controller for controlling electric power fed from an on-board power supply and supplying it to the electric motor to control operation of the electric motor, the electric motor being provided as a separate component from the differential gear and disposed on the opposite-to-propeller-shaft-side of the differential gear and more rearward in the vehicle than axles of the wheels.

According to this construction, not only is the parts construction simple, but also maintainability is improved.

According to the present invention, not only is the parts construction simple, but also maintainability can be improved.

### BRIEF DESCRIPTION OF THE DRAWINGS

Fig. 1 is a plan view showing the construction of a hybrid vehicle which carries thereon a vehicle drive device according to a first embodiment of the present invention.
Fig. 2 is a rear view showing the construction of principal parts as seen from behind the hybrid vehicle carrying the vehicle drive device of the first embodiment thereon.
Fig. 3 is a side view showing the construction of the principal parts as seen from a lateral side of the hybrid vehicle carrying the vehicle drive device of the first embodiment thereon.
Fig. 4 is a sectional view showing the construction of a driving force transducer and that of an electric motor in the vehicle drive device of the first embodiment.
Fig. 5 is a sectional view showing the operation of the driving force transducer and that of the electric motor in the vehicle drive device of the first embodiment.
Fig. 6 is a sectional view showing the operation of the driving force transducer and that of the electric motor in the vehicle drive device of the first embodiment.
Fig. 7 is a sectional view showing the operation of the driving force transducer and that of the electric motor in the vehicle drive device of the first embodiment.
Fig. 8 is a table explanatory of the operation of the driving force transducer in the vehicle drive device of the first embodiment.
Fig. 9 is a rear view showing the construction of other principal parts as seen from behind the hybrid vehicle carrying the vehicle drive device of the first embodiment thereon.
Fig. 10 is a side view showing the construction of those other principal parts as seen from a lateral side of the hybrid vehicle carrying the vehicle drive device of the first embodiment thereon.
Fig. 11 is a side view showing the construction of the remaining principal parts as seen from a lateral side of the hybrid vehicle carrying the vehicle drive device of the first embodiment thereon.
Fig. 12 is a plan view showing the construction of a hybrid vehicle which carries thereon a vehicle drive device according to a second embodiment of the present invention.
Fig. 13 is a plan view showing the construction of a hybrid vehicle which carries thereon a vehicle drive device according to a third embodiment of the present invention.
Fig. 14 is a plan view showing the construction of a hybrid vehicle which carries thereon a vehicle drive device according to a fourth embodiment of the present invention.
Fig. 15 is a plan view showing the construction of a hybrid vehicle which carries thereon a vehicle drive device according to a fifth embodiment of the present invention.

### DETAILED DESCRIPTION OF THE PREFERRED EMBODIMENTS

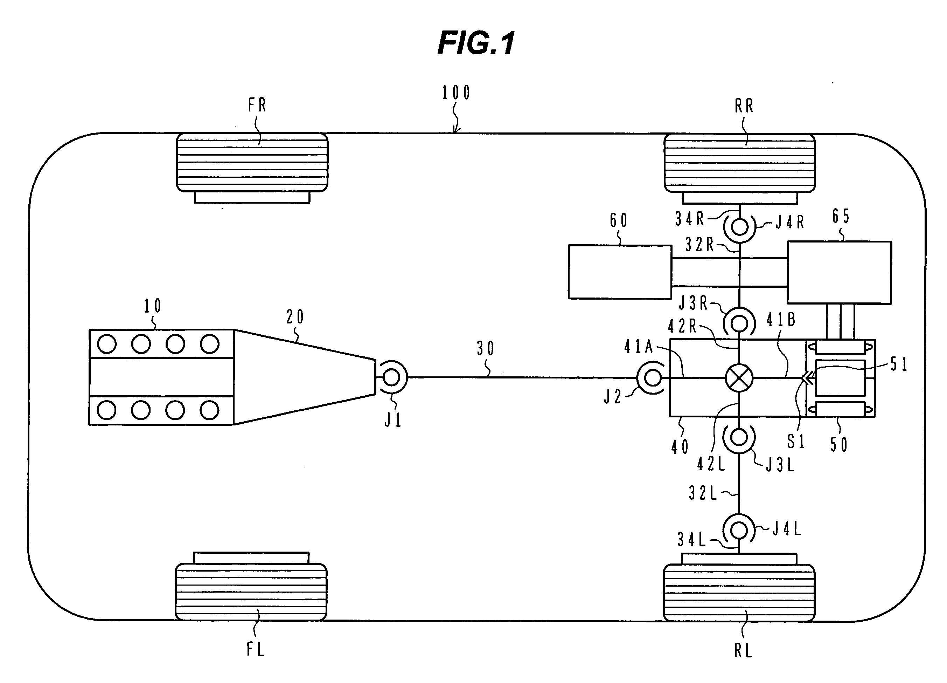

With reference to Figs. 1 to 11, a description will be given below about the construction of a vehicle drive device according to a first embodiment of the present invention.

First, with reference to Fig. 1, a description will be given about the construction of a hybrid vehicle which carries thereon the vehicle drive device of this embodiment.

Fig. 1 is a plan view showing the construction of a hybrid vehicle which carries thereon the vehicle drive device of the first embodiment.

A hybrid vehicle 100 includes front wheels FR and FL and rear wheels RR and RL. An internal combustion engine 10 is disposed on a front side of the vehicle, namely, on the front wheels FR and FL side. As will be described later, driving force of the internal combustion engine 10 is transmitted to the rear wheels RR and RL to drive the rear wheels. That is, the vehicle is an FR (Front Engine Rear Drive) vehicle.

Driving force of the internal combustion engine 10 is shifted by a transmission 20. An output shaft of the transmission 20 and a propeller shaft 30 are connected together through a constant velocity joint J1. The propeller shaft 30 and a first input shaft 41A of a driving force transducer 40 are connected together through a constant velocity joint J2. Therefore, the output of the transmission 20 is transmitted to the first input shaft 41A of the driving force transducer 40 through the propeller shaft 30.

The driving force transducer 40 is made up of a differential gear, a transmission, a clutch, and a reduction mechanism. The details of the driving force transducer 40 will be described later with reference to Fig. 4. The driving force transducer 40 and an electric motor 50 are constituted separately from each other. The electric motor 50 is mounted on the opposite-to-propeller shaft 30 side of the driving force transducer 40 and on a rear side of the driving force transducer 40 (differential gear). By the side opposite to the propeller shaft as referred to herein it is meant that the electric motor 50 is positioned on the rear side in the longitudinal direction of the vehicle with respect to an output shaft 42R (42L) of the driving force transducer shown in Fig. 4. It can also be said that the electric motor 50 is disposed on the rear side of the driving wheels. Since the driving force transducer 40 and the electric motor 50 are constituted separately from each other, an output shaft 51 of the electric motor 50 is connected to a second input shaft 41B of the driving force transducer 40 through a spline bearing S1. The spline bearing S1 is easy to engage and disengage, can easily mount/dismount the electric motor 50 to/from the driving force transducer 40, and permits transfer of the driving force of the electric motor 50 to the driving force transducer 40.

The driving force transducer 40 adds together the driving force fed from the internal combustion engine 10 and the driving force fed from the electric motor 50. The right output shaft 42R of the driving force transducer 40 is connected to a transfer shaft 32R through a constant velocity joint J3R. The transfer shaft 32R is connected to an axle 34R of the right rear wheel RR through a constant velocity joint J4R. The left output shaft 42L of the driving force transducer 40 is connected to a transfer shaft 32L through a constant velocity joint J3L. The transfer shaft 32L is connected to an axle 34L of the left rear wheel RL through a constant velocity joint J4L. Therefore, the driving force obtained by adding together the driving forces of both internal combustion engine 10 and electric motor 50 with use of the driving force transducer 40 is distributed to the right and left rear wheels RR and RL. The output shaft 42R, the transfer shaft 32R and the axle 34R will generically be termed the driving shaft and so will be the output shaft 42L, the transfer shaft 32L and the axle 34L.

The electric motor 50 is a brushless AC three-phase synchronous motor. Direct current from a battery 60 is converted to a three-phase current by a switching circuit of an inverter 65, and the electric motor 50 is thus driven with AC. Although in this embodiment a brushless AC three-phase synchronous motor is used as the electric motor 50, there may be used another type of electric motor, e.g., an induction motor or a DC motor with a brush. In the case of using a DC motor with a brush, the inverter 65 becomes unnecessary. A DC/DC converter (not shown) may be disposed between the inverter 65 and the battery 60. In this case, an efficient hybrid operation can be performed by controlling the voltage of the battery 60 and the regenerative voltage of the electric motor 50 with use of the DC/DC converter.

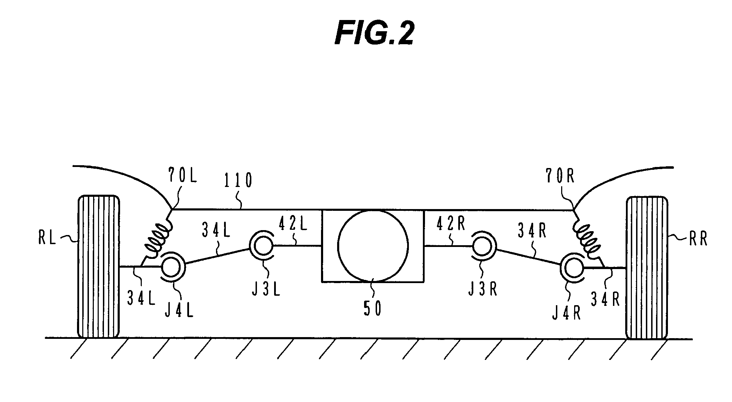

Next, with reference to Figs. 2 and 3, a description will be given about a mounting structure of the driving force transducer 40 and that of the electric motor 50 in the hybrid vehicle which carries thereon the vehicle drive device of this embodiment.

Fig. 2 is a rear view showing the construction of a principal portion as seen from behind the hybrid vehicle with the vehicle drive device of this first embodiment mounted thereon. Fig. 3 is a side view showing the construction of the principal portion as seen from a lateral side of the hybrid vehicle with the vehicle drive device of this first embodiment mounted thereon. The same reference numerals in Figs. 2 and 3 as those in Fig. 1 represent the same portions as those in Fig. 1.

Here, an "above-the spring" system mounted to the body portion of the vehicle will be described as an example of the differential gear which distributes the power from the propeller shaft to the right and left wheels.
The "above-the-spring" system is generally used in passenger cars.

As shown in Fig. 2, the driving force transducer 40 disposed above the springs is attached to the underside of a body 110 of the vehicle. The electric motor 50 is also attached to the underside of the vehicle body 110. The vehicle body 110 is supported by dampers 70R and 70L. For example, springs or shock absorbers are used as the dampers 70R and 70L.

As shown in Fig. 3, the driving force transducer 40 and the electric motor 50 are attached to the underside of the vehicle body 110. The second input shaft 41B of the driving force transducer 40 and the output shaft 51 of the electric motor 50 are level with each other. That is, the output shaft 51 of the electric motor 50 is present on an extension of the second input shaft 41B of the driving force transducer 40, so that the output shaft 51 of the electric motor 50 can be connected to the input shaft 41B of the driving force transducer 40 through the spline bearing S1. The spline bearing S1 is easy to engage and disengage, can easily mount/dismount the electric motor 50 to/from the driving force transducer 40, and can transfer the driving force of the electric motor 50 to the driving force transducer 40. For example, after the driving force transducer 40 is mounted beforehand to the underside of the vehicle body 110, the electric motor 50 can be mounted to the underside of the vehicle body 110 with the output shaft 51 of the electric motor 50 engaged with the second input shaft 41B of the driving force transducer 40 through the spline bearing S1. When the electric motor 50 is removed, only the electric motor 50 can be removed with ease because the driving force transducer 40 is mounted to the underside of the vehicle body 110 and is held thereby.

Next, with reference to Figs. 4 to 8, a description will be given below about the construction and operation of the driving force transducer 40 and the electric motor 50 in the vehicle drive device of this first embodiment.

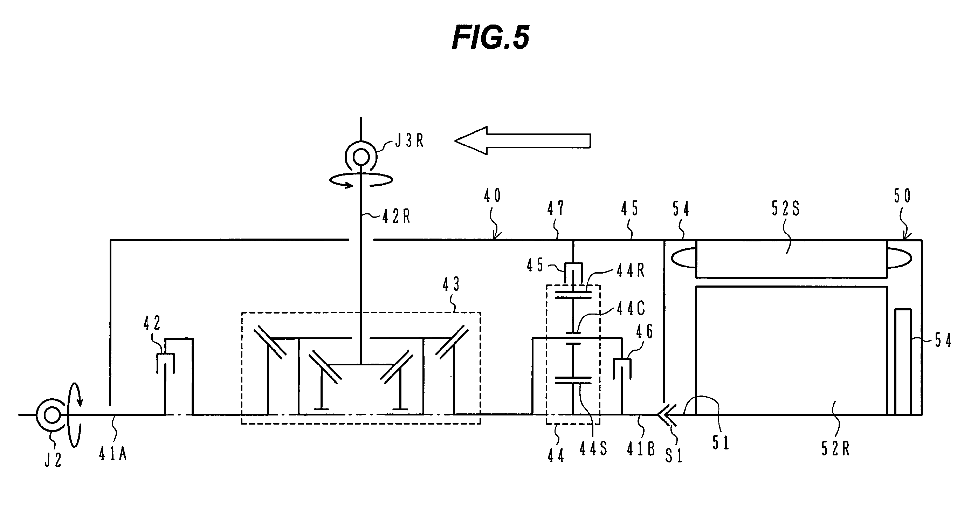

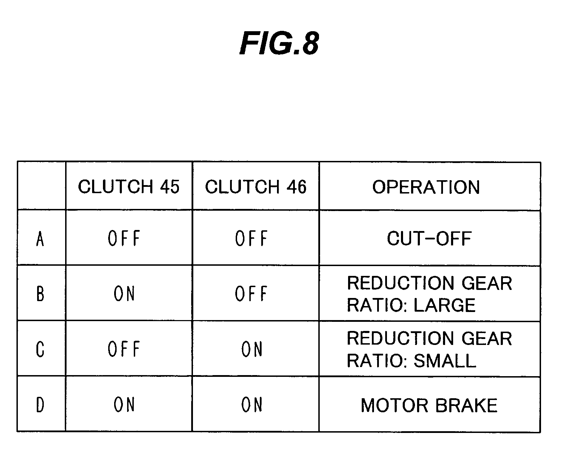

Fig. 4 is a sectional view showing the construction of the driving force transducer and that of the electric motor in the vehicle drive device of this first embodiment. Figs. 5 to 7 are sectional views showing the operation of the driving force transducer and that of the electric motor in the vehicle drive device of this first embodiment. In Figs. 4 to 7, the left direction represents the front side of the vehicle, and the upper direction represents the right side of the vehicle. Only the right half is shown for simplification. Fig. 8 is a diagram explaining the operation of the driving force transducer in the vehicle drive device of this first embodiment. In Figs. 4 to 7, the same reference numerals as those in Figs. 1 to 3 represent the same portions as those in Figs. 1 to 3.

Driving force provided from the internal combustion engine 10 shown in Fig. 1 through the propeller shaft 30 is transmitted to the first input shaft 41A of the driving force transducer 40 through the constant velocity joint J2. The input shaft 41A is connected to a differential gear 43 through a propeller-shaft-side clutch 42. In accordance with an ON or OFF signal provided from a controller (not shown) the propeller shaft-side clutch 42 can switch the state between transfer and cutoff of the driving force fed from the internal combustion engine 10.

The differential gear 43 uses a bevel gear. As the differential gear 43 there may also be used a differential gear using a planetary gear such as, for example, a double pinion planetary differential gear or a composite planetary differential gear. The differential gear 43 may also be provided with an operation limiting mechanism.

The electric motor 50 comprises a motor stator 52S and a motor rotor 52R. The electric motor 50 is provided with a housing 54. The motor stator 52S is fixed to the inner periphery of the housing 54. The motor rotor 52R is positioned on the inner periphery side of the motor stator 52S and is supported rotatably by a bearing or the like. The motor rotor 52R receives electric power from the inverter 65 and generates driving force.

The rotary shaft (output shaft) 51 of the motor rotor 52R is disposed perpendicularly to the output shaft 42R (42L) of the driving force transducer 40, and the centroid balance of the driving force transducer 40 and the electric motor 50 is maintained between the right and left of the vehicle, whereby turning performance of the vehicle is improved. With such a layout of the electric motor 50, a hollow shaft need not be used as the rotary shaft of the motor rotor 52R, so that a resolver having a small inner diameter and reduced in size and weight becomes employable as a resolver 106 for measuring the number of revolutions of the electric motor which is necessary for controlling the three-phase AC motor.

The driving force provided from the output shaft 52R of the motor rotor 52R is transmitted to the second input shaft 41B of the driving force transducer 40 through the spline bearing S1. The driving force provided from the second input shaft 41B is transmitted to both a motor-side second clutch 46 and a sun gear 44S of a planetary gear 44. The planetary gear 44 is made up of the sun gear 44S, a ring gear and a planetary gear carrier 44C.

The planetary gear carrier 44C is connected to the other end of the motor-side second clutch 46. A motor-side first clutch 45 is connected to the ring gear 44R of the planetary gear 44. The other end of the motor-side first clutch 45 is fixed to a housing 47 of the driving force transducer 40. Output from the planetary gear 44 is taken out from the carrier 44R. The carrier 44C is connected to the differential gear 43. The motor-side first clutch 45 and the motor-side second clutch 46 can switch between transfer and cut-off of the driving force in accordance with an ON or OFF command provided from a controller (not shown).

The planetary gear 44 and the motor-side clutches 45 and 46 can be built in the housing 54 of the electric motor 50.

The planetary gear 44, the motor-side first clutch 45 and the motor-side second clutch 46 can switch the state of power transfer by combinations of clutch engagement/disengagement. Fig. 8 illustrates how the relation between the electric motor and the differential gear 43 changes depending on engagement/disengagement of the two clutches. A description will now be given with reference to Figs. 4 to 7 to show that such relation is obtained.

As shown in Fig. 8, row A, when both motor-side first clutch 45 and motor-side second clutch 46 are in a disengaged state, such a state of connection as shown in Fig. 4 is obtained. In this state, even if the motor rotor 52R generates driving force, the planetary ring gear 44R, whose inertia-mass ratio (including rotational inertia) relative to the vehicle body is extremely small, idles and power is no longer transmitted to the differential gear 43. This is also true of the case where power is transmitted from a wheel axle 26 for example during deceleration, with the ring gear 44R idling and no power transmitted to the motor rotor 52R. This state is equivalent to the state in which the transfer of power between the motor rotor 52R and the differential gear 43 is not performed (clutch OFF state).

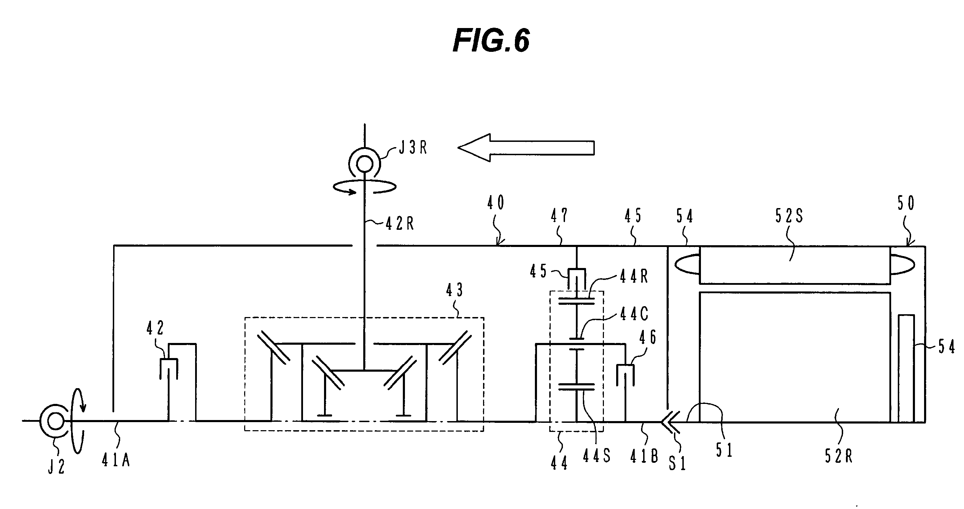

As shown in Fig. 8, row B, when the motor-side first clutch 45 is ON (engaged) and the motor-side second clutch 46 is OFF (disengaged), such a state of connection as shown in Fig. 5 is obtained. In this state, the planetary ring gear 44R is fixed to the housing 47 of the driving force transducer 40 and the planetary gear carrier 44C becomes rotation-free, so that a state equivalent to that of the planetary reduction mechanism of the input sun gear and output carrier is obtained. At this time, given that the number of ring gear teeth is Zr and that of sun gear teeth is Zs, a reduction gear ratio λ = (Zr + Zs)/Zs (>1) is obtained. In this case, the reduction gear ratio is larger than in the case of Fig. 6 which will be described later.

As shown in Fig. 8, row C, when the motor-side first clutch 45 is OFF and the motor-side second clutch 46 is ON, such a state of connection as shown in Fig. 6 is obtained. At this time, the planetary gear carrier 44C and the planetary sun gear 44S are connected and rotate together. In this case, since a pinion gear of the planetary gear carrier does not rotate, the planetary ring gear 44R also rotates at the same number of revolutions. That is, a state of a small reduction gear ratio (reduction gear ratio: 1) is obtained in which the planetary sun gear 44S rotates integrally with the planetary gear carrier 44C and the planetary ring gear 44R.

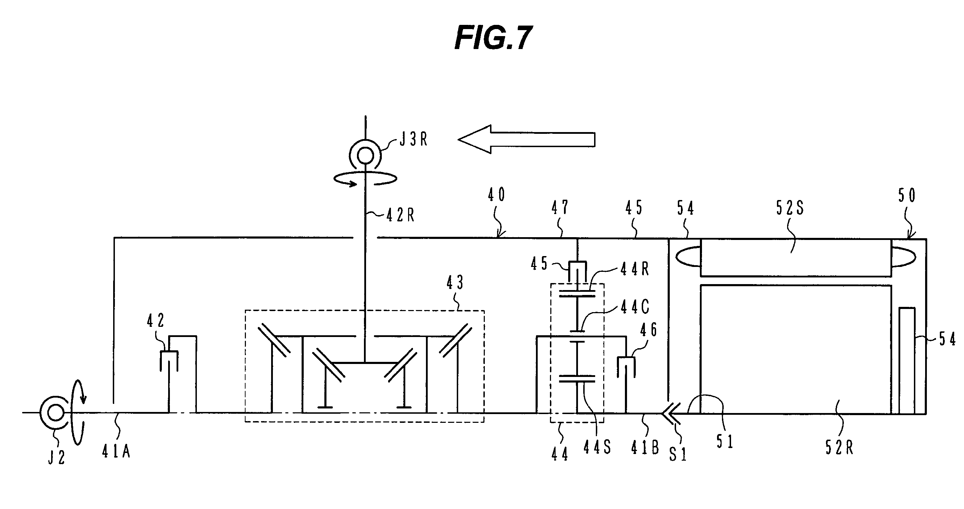

As shown in Fig. 8, row D, when the motor-side first clutch 45 is ON and the motor-side second clutch 46 is ON, such a state of connection as shown in Fig. 7 is obtained. In this state, the planetary sun gear 44S becomes integral with the planetary gear carrier 44C and the planetary ring gear 44R, and the planetary ring gear 44R is fixed to the housing of the driving force transducer 40. Since in this state the planetary gear 44 is integrally fixed to the housing of the drive force transducer 40, a motor braking state is obtained in which the motor rotor 52R is connected to the housing of the driving force transducer 40.

Next, the following description is provided about the operation of the vehicle to which this embodiment described above in connection with Figs. 4 to 8 is applied.

When the vehicle is at rest, the propeller shaft-side clutch 42, the motor-side first clutch 45 and the motor-side second clutch 46 are all disengaged. In this state, the output shafts 42R and 42L of the driving force transducer 40 are in a power OFF state from both internal combustion engine 10 and the electric motor 50. The wheels RR and RL assume a freely rotatable state equal to the neutral state in an ordinary type vehicle.

In a vehicle starting state, fuel efficency is improved by EV (electric vehicle) running which utilizes only the driving force of the electric motor 50. At this time, by disengaging the propeller-shaft-side clutch 42, accompanying rotation of the internal combustion engine 10 from the propeller shaft 30 can be prevented, and the effect of a further improvement of fuel efficiency is attained. The two motor-side clutches 45 and 46 are in the state of a large reduction ratio as in Fig. 8, row B, in which the driving force generated by the motor is increased and transmitted.

If the EV running is continued too long, the amount of consumption of the battery 60 becomes too large. Therefore, when speed increases to a certain degree, there is made a shift from the EV running to hybrid running performed by both the electric motor 50 and internal combustion engine 10. For the shift to the hybrid running, the number of revolutions of the propeller shaft 30 is increased by the internal combustion engine 10 to diminish the difference in the number of revolutions between the propeller shaft 30 and the propeller-shaft-side clutch 42; thereafter, the propeller shaft-side clutch is engaged. After the engagement of the propeller-shaft-side clutch, the vehicle assumes a hybrid running state in which the driving force of the internal combustion engine 10 and the driving force of the electric motor 50 are combined together.

If acceleration is continued in that state, the number of revolutions of the electric motor 50 becomes too large, and induced voltage becomes too high. Therefore, a shift is made to the state of a small reduction gear ratio shown in Fig. 8, row C. During the shift, both the motor-side clutches reverse their state of connection from ON to OFF or from OFF to ON. Therefore, first the motor-side second clutch 46 is disengaged; then, via the state of Fig. 8, row A, the motor-side first clutch 45 is engaged, making a shift to the small reduction gear ratio of Fig. 8, row C. The reason why this operation goes by way of Fig. 8, row A is that if there is even an instant at which both of the motor-side clutches are engaged, a shift will be made to the motor braking state, causing an excessive shock, and that therefore it is intended to prevent the occurrence of such a state.

During deceleration, regeneration is performed in the electric motor 50 in order to restore running energy of the vehicle. During the regeneration, the propeller-shaft-side clutch 42 is disengaged, whereby it is possible to prevent accompanying rotation of the internal combustion engine 10 from the propeller shaft 30 and hence possible to effect more regeneration by an amount corresponding to engine brakes. However, at the time of acceleration after deceleration it is necessary to ensure the time for matching the number of revolutions ahead of the propeller-shaft-side clutch 42 with that behind the same clutch (matching the number of revolutions of the propeller-shaft-side clutch 42 after deceleration and before acceleration). Therefore, engagement and disengagement of the propeller-shaft-side clutch 42 are performed with the trade-off between the amount of regenerative energy and deceleration-acceleration response taken into account. If the number of revolutions of the electric motor 50 becomes too small, it becomes impossible to effect regeneration. Therefore, before the occurrence of this state, a shift is made from the state of a small reduction gear ratio shown in Fig. 8, row C to the state of a large reduction gear ratio shown in Fig. 8, row B, and the number of revolutions of the electric motor 50 is increased to widen a vehicle speed at which regeneration can be achieved. Also at this time, both the motor-side clutches reverse their state of connection from ON to OFF or from OFF to ON, thus necessitating the operation by way of Fig. 8, row A. When the number of revolutions of the electric motor 50 decreases to a degree to which regeneration cannot be achieved even in the state of a large reduction gear ratio, both the motor-side clutches are disengaged (Fig. 8, row A) for separation of the electric motor into the neutral state.

In the case where the shift position is assigned to "Parking (or a setting condition equivalent thereto)" in a so-called automatic transmission vehicle, the propeller-shaft-side clutch 42 is engaged to fix the propeller shaft 30 against rotation, for example, in the interior of the transmission 20. Further, both the motor-side clutches 45 and 46 are engaged (Fig. 8, row D) to fix the electric motor against rotation. As a result, both input ends of the differential gear 43 are fixed, so that wheels 17 are also fixed by the output shafts 42R and 42L, leading to a braked state, whereby an effect equivalent to the parking state in an ordinary type vehicle is obtained.

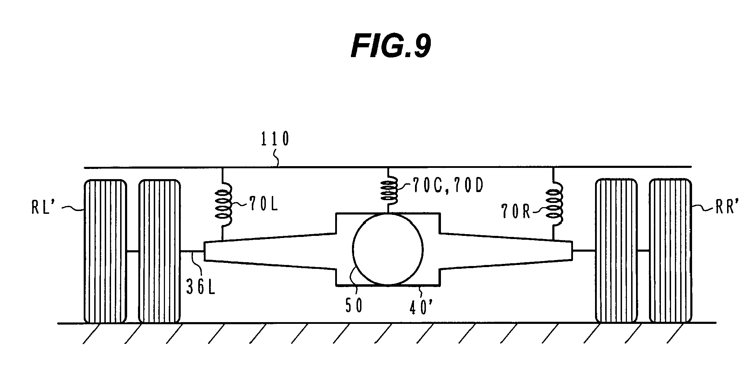

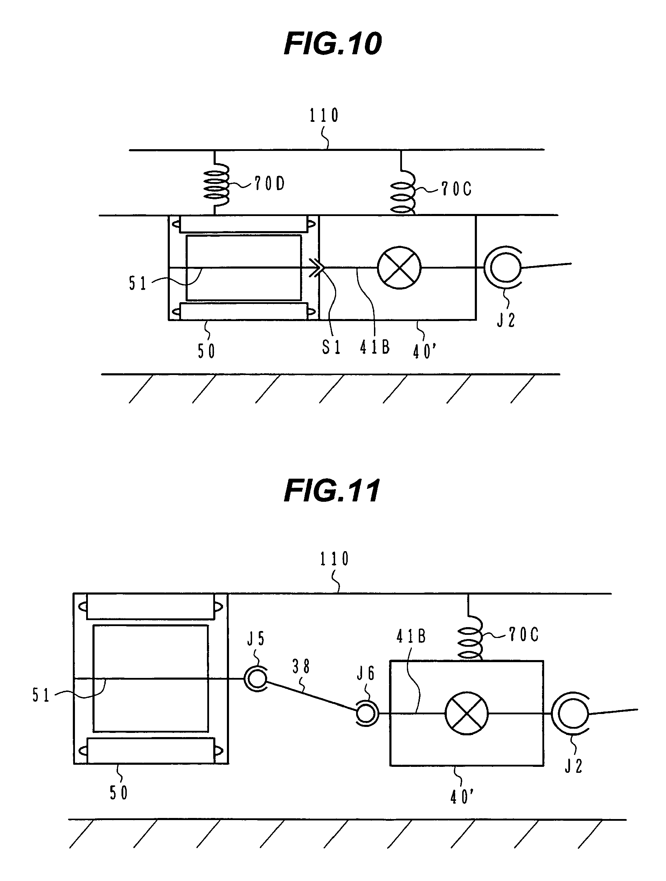

Next, with reference to Figs. 9 and 10, a description will be given below about another mounting structure of the driving force transducer and that of the electric motor in the hybrid vehicle which carries thereon the vehicle drive device of this first embodiment.

Fig. 9 is a rear view showing a construction of other principal parts as seen from behind the hybrid vehicle with the vehicle drive device of this first embodiment mounted thereon. Fig. 10 is a side view showing the construction of those other principal parts as seen from a lateral side of the hybrid vehicle with the vehicle drive device of this first embodiment mounted thereon. In Figs. 9 and 10, the same reference numerals as those in Figs. 1 to 3 represent the same portions as those in Figs. 1 to 3.

Here, a "below-the-spring" system mounted to wheel axles will be described as an example of the differential gear which distributes the power from the propeller shaft to the right and left wheels. The "below-the-spring" system is generally used in trucks.

As shown in Fig. 9, a driving force transducer 40' disposed below the springs is supported under a vehicle body 110 by dampers 70R and 70L. A basic construction of the driving force transducer 40' is the same as that shown in Fig. 4. In this construction, constant velocity joints as shown in Fig. 4 are generally not used.

As shown in Fig. 10, the driving force transducer 40' and the electric motor 50 are supported by dampers 70C and 70D, respectively. Springs or shock absorbers are used as the dampers 70R, 70L, 70C and 70D. The driving force provided from the propeller shaft is distributed to right and left driving shafts 36R and 36L by the "below-the-spring" differential gear 40'.

As shown in Fig. 10, the second input shaft 41B of the driving force transducer 40' and the output shaft 51 of the electric motor 50 are level with each other. That is, the output shaft 51 of the electric motor 50 is present on an extension of the second input shaft 41B of the driving force transducer 40', so that the output shaft 51 of the electric motor 50 can be connected to the second input shaft 41B of the driving force transducer 40' by the spline bearing S1. The spline bearing S1 is easy to engage and disengage, can easily mount/dismount the electric motor 50 to/from the driving force transducer 40', and can transfer the driving force of the electric motor 50 to the driving force transducer 40'. For example, after the driving force transducer 40 is mounted beforehand to the underside of the vehicle body 110 through the damper 70C, the output shaft 51 of the electric motor 50 can be brought into engagement with the second input shaft 41B of the driving force transducer 40' through the spline bearing S1. Besides, when the electric motor 50 is removed, only the electric motor 50 can be removed with ease because the driving force transducer 40' is held by the damper 70C.

Next, with reference to Fig. 11, a description will be given below about a still another mounting structure of the driving force transducer and that of the electric motor in the hybrid vehicle which carries thereon the vehicle drive device of this first embodiment.

Fig. 11 is a side view showing a construction of the remaining principal parts as seen from a lateral side of the hybrid vehicle with the vehicle drive device of this first embodiment mounted thereon. In Fig. 11, the reference numerals as those in Fig. 10 represent the same portions as those in Fig. 10.

In the illustrated example in Fig. 11, the driving force transducer 40' is supported under the 'vehicle body 110 by the damper 70C, but the electric motor 50 is mounted to the underside of the vehicle body 110. Consequently, the second input shaft 41B of the driving force transducer 40' and the output shaft 51 of the electric motor 50 are positioned at different heights. Therefore, the output shaft 51 of the electric motor 50 is connected to a shaft 38 through a constant velocity joint J5. The shaft 38 is connected to the second input shaft 41B of the driving force transducer 40' through a constant velocity joint J6.

The constant velocity joint J5 is easy to engage and disengage, can mount/dismount the electric motor 50 easily to/from the driving force transducer 40', and can transmit the driving force of the electric motor 50 to the driving force transducer 40'. For example, after the driving force transducer 40' is mounted beforehand to the underside of the vehicle body 110 through the damper 70C, the output shaft 51 of the electric motor 50 can be brought into engagement with the second input shaft 41B of the driving force transducer 40' through the shaft 38 and the constant velocity joint J5. When the electric motor 50 is removed, only the electric motor 50 can be removed with ease because the driving force transducer 40' is held by the damper 70C.

According to this embodiment, as described above, since the electric motor 50 is mounted on the side opposite to the propeller shaft 30 of the driving force transducer 40, an electric motor using a hollow shaft becomes unnecessary, which simplifies the parts construction and reduces the size of the electric motor.

Further, since the driving force transducer 40 and the electric motor 50 are constituted separately from each other and the output shaft 51 of the electric motor 50 is connected to the second input shaft 41B of the driving force transducer 40 through the spline bearing S1, it is possible to remove only the electric motor, thus improving maintainability.

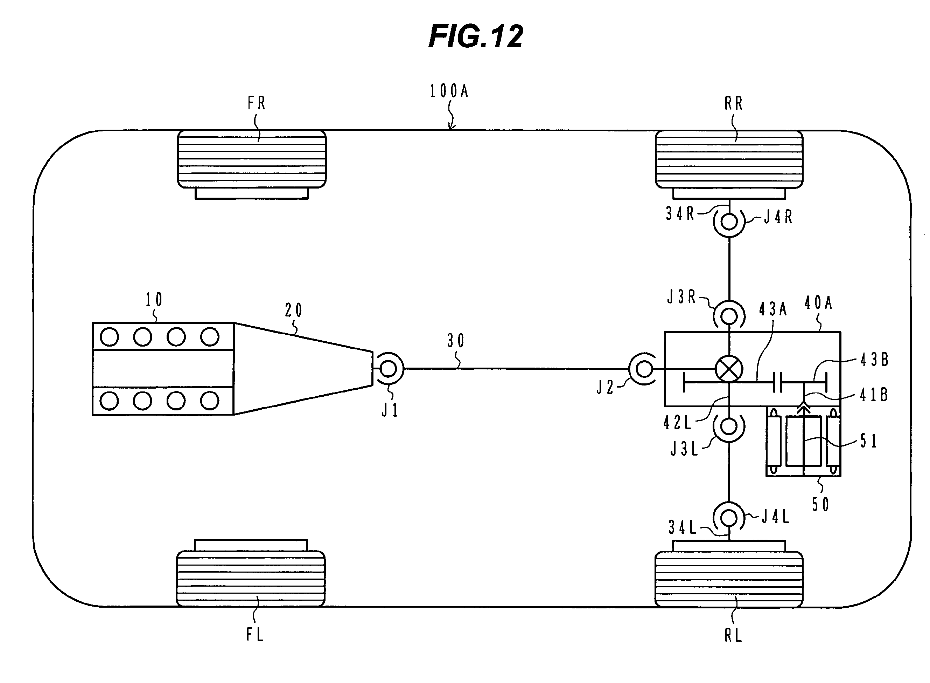

Next, with reference to Fig. 12, the following description is provided about the construction of a hybrid vehicle which carries thereon a vehicle drive device according to a second embodiment of the present invention.

Fig. 12 is a plan view showing the construction of the hybrid vehicle which carries thereon the vehicle drive device of this second embodiment. In Fig. 12, the same reference numerals as those in Fig. 1 represent the same portions as those in Fig. 1.

In the example shown in Fig. 1, the rotary shaft of the motor rotor 52R is perpendicular to the output shaft 27 of the driving force transducer 40.

In contrast, in the hybrid vehicle 100A according to this second embodiment, the rotary shaft of the motor rotor 52R in the electric motor 50 is disposed in parallel with an output shaft 42 of a driving force transducer 40A. The driving force transducer 40A includes a gear 43A connected to the output shaft 42L and a gear 43B connected to the gear 43A and having the second input shaft 41B. In Fig. 12, the inverter 65 and the battery 60 are not shown.

Since the second input shaft 41B of the driving force transducer 40A and the output shaft 51 of the electric motor 50 are level with each other, the output shaft 51 of the electric motor 50 can be connected to the second input shaft 41B of the driving force transducer 40A by the spline bearing S1. The spline bearing S1 is easy to engage and disengage, can mount/dismount the electric motor 50 easily to/from the driving force transducer 40A, and can transfer the driving force from the electric motor 50 to the driving force transducer 40A. For example, after the driving force transducer 40A is mounted beforehand to the underside of the vehicle body 110A, the output shaft 51 of the electric motor 50 can be mounted to the underside of the vehicle body 110A with the output shaft 51 engaged with the second input shaft 41B of the driving force transducer 40A through the spline bearing S1. Moreover, when the electric motor 50 is removed, only the electric motor 50 can be removed with ease because the driving force transducer 40A is mounted to the underside of the vehicle body 110A and is held thereby.

According to this second embodiment described above, it becomes difficult to achieve centroid balance between the right and left. However, since the electric motor is mounted on the opposite-to-propeller-shaft-side of the driving force transducer, an electric motor using a hollow shaft becomes unnecessary, which simplifies the parts construction and reduces the size of the electric motor.

Since the driving force transducer and the electric motor are constituted separately from each other and the output shaft of the electric motor is connected to the second input shaft of the driving force transducer through the spline bearing, it is possible to remove only the electric motor, thus improving maintainability.

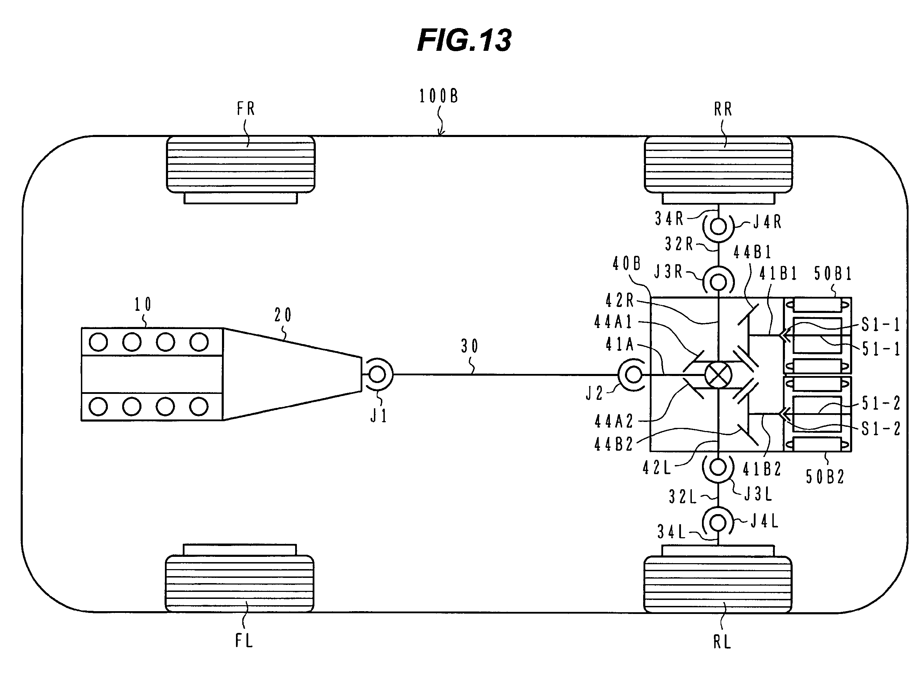

Next, with reference to Fig. 13, a description will be given below about the construction of a hybrid vehicle which carries thereon a vehicle drive device according to a third embodiment of the present invention.

Fig. 13 is a plan view showing the construction of the hybrid vehicle which carries thereon the vehicle drive device of this third embodiment. In Fig. 13, the same reference numerals as those in Fig. 1 represent the same portions as those in Fig. 1.

Only one electric motor 50 is used in the example shown in Fig. 1.

In contrast, a hybrid vehicle 100B according to this third embodiment is provided with two electric motors 50B1 and 50B2. Moreover, the rotary shaft of the motor rotor 52 is perpendicular to an output shaft 42 of a driving force transducer 40B.

The driving force transducer 40B includes a bevel gear 44A1 connected to the output shaft 42R and a bevel gear 44B1 connected to the bevel gear 44A1 and having a second input shaft 41B1. The driving force transducer 40B further includes a bevel gear 44A2 connected to the output shaft 42L and a bevel gear 44B2 connected to the bevel gear 44A2 and having a third input shaft 41B1. In Fig. 13, the inverter 65 and the battery 60 are not shown.

The second input shaft 41B1 of the driving force transducer 40B and an output shaft 51-1 of the electric motor 50B1 are level with each other, so that the output shaft 51-1 of the electric motor 50B1 can be connected to the second input shaft 41B1 of the driving force transducer 40B by a spline bearing S1-1. Likewise, since a third input shaft 41B2 of the driving force transducer 40B and an output shaft 51-2 of the electric motor 50B2 are level with each other, the output shaft 51-2 of the electric motor 50B2 can be connected to the third input shaft 41B2 of the driving force transducer 40B by a spline bearing S1-2.

The spline bearings S1-1 and S1-2 are easy to engage and disengage, can mount/dismount the electric motors 50B1 and 50B2 easily to/from the driving force transducer 40B, and can transfer driving force from the electric motors 50B1 and 50B2 to the driving force transducer 40B. For example, after the driving force transducer 40B is mounted beforehand to the underside of a vehicle body 110B, the electric motors 50B1 and 50B2 can be mounted to the underside of the vehicle body 110B with the output shafts 51-1 and 51-2 of the electric motors 50B1 and 50B2 engaged with the second input shaft 41B of the driving force transducer 40B by the spline shaft S1. When the electric motors 50B1 and 50B2 are removed, only the electric motors 50B1 and 50B2 can be removed with ease because the driving force transducer 40B is mounted to the underside of the vehicle body 110B and is held thereby.

According to this third embodiment as described above, since the electric motors are mounted on the opposite-to-propeller-shaft-side of the driving force transducer, an electric motor using a hollow shaft becomes unnecessary, which simplifies the parts construction and reduces the motor size.

Besides, since the driving force transducer and the electric motors are constituted separately from each other and the output shafts of the electric motors are connected to the input shafts of the driving force transducer through the spline bearing, only the electric motors can be removed, thus improving maintainability.

Further, since two electric motors are used, it is possible to achieve centroid balance between the right and left, and it becomes possible to transmit the driving force separately to each of the right and left wheels, thus improving turning performance.

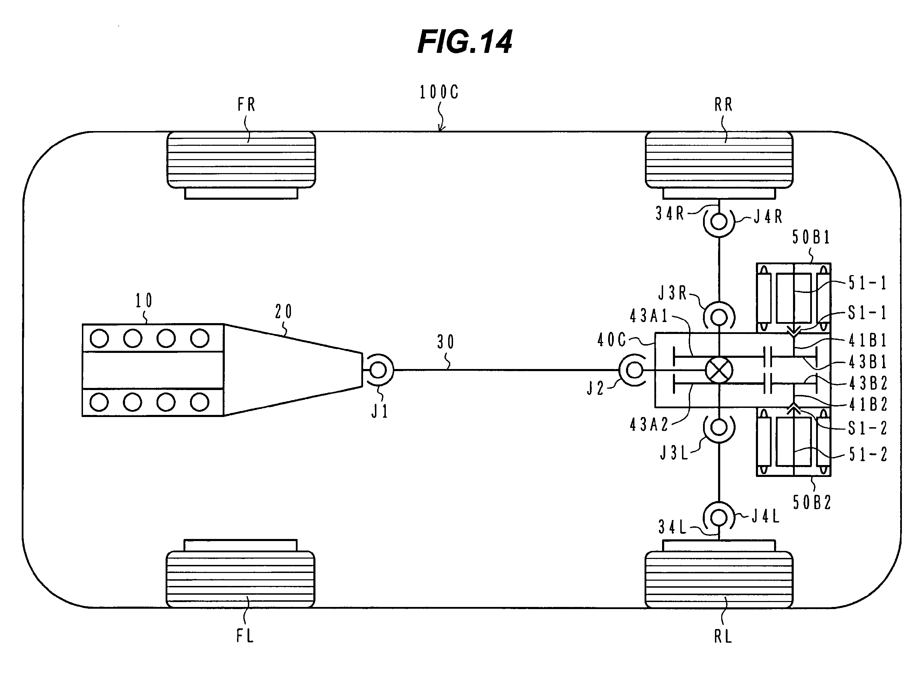

Next, with reference to Fig. 14, the following description is provided about the construction of a hybrid vehicle which carries thereon a vehicle drive device according to a fourth embodiment of the present invention.

Fig. 14 is a plan view showing the construction of the hybrid vehicle which carries thereon the vehicle drive device of this fourth embodiment. In Fig. 14, the same reference numerals as those in Fig. 1 represent the same portions as those in Fig. 1.

In the example shown in Fig. 1, only one electric motor 50 is used, and the rotary shaft of the motor rotor 52R is perpendicular to the output shaft 27 of the driving force transducer 40.

In contrast, a hybrid vehicle 100C according to this fourth embodiment is provided with two electric motors 50B1 and 50B2. A driving force transducer 40C includes a gear 43A1 connected to the output shaft 42R and a gear 43B1 connected to the gear 43A1 and having the second input shaft 41B1. The driving force transducer 40C further includes a gear 43A2 connected to the output shaft 42L and a gear 43B2 connected to the gear 43A2 and having the third input shaft 41B2. In Fig. 14, the inverter 65 and the battery 60 are not shown.

The second input shaft 41B1 of the driving force transducer 40B and the output shaft 51-1 of the electric motor 50B1 are level with each other, so that the output shaft 51-1 of the electric motor 50B1 can be connected to the second input shaft 41B1 of the driving force transducer 40B by the spline bearing S1-1. Likewise, since the third input shaft 41B2 of the driving force transducer 40B and the output shaft 51-2 of the electric motor 50B2 are level with each other, the output shaft 51-2 of the electric motor 50B2 can be connected to the third input shaft 41B2 of the driving force transducer 40B by the spline bearing S1-2.

The spline bearings S1-1 and S1-2 are easy to engage and disengage, can mount/dismount the electric motors 50B1 and 50B2 easily to/from the driving force transducer 40B, and can transfer the driving force from the electric motors 50B1 and 50B2 to the driving force transducer 40B. For example, after the driving force transducer 40B is mounted beforehand to the underside of the vehicle body 110C, the electric motors 50B1 and 50B2 can be mounted to the underside of the vehicle body 110 with the output shafts 51-1 and 51-2 of the electric motors 50B1 and 50B2 engaged with the second input shaft 41B1 of the driving force transducer 40B by the spline bearings S1 (bearings S1-1 and S1-2). When the electric motors 50B1 and 50B2 are removed, only the electric motors 50B1 and 50B2 can be removed with ease because the driving force transducer 40B is mounted to the underside of the vehicle body 110C and is held thereby.

According to this fourth embodiment as described above, since the electric motors are mounted on the opposite-to-propeller-shaft-side of the driving force transducer, an electric motor using a hollow shaft becomes unnecessary, which simplifies the parts construction and reduces the motor size.

Moreover, since the driving force transducer and the electric motor are constituted separately from each other and the output shafts of the electric motors are connected to the input shafts of the driving force transducer through the spline bearings, only the electric motors can be removed, thus improving maintainability.

Further, since two electric motors are used, it is possible to achieve centroid balance between the right and left, and it becomes possible to transmit the driving force separately to each of the right and left wheels, thus improving turning performance.

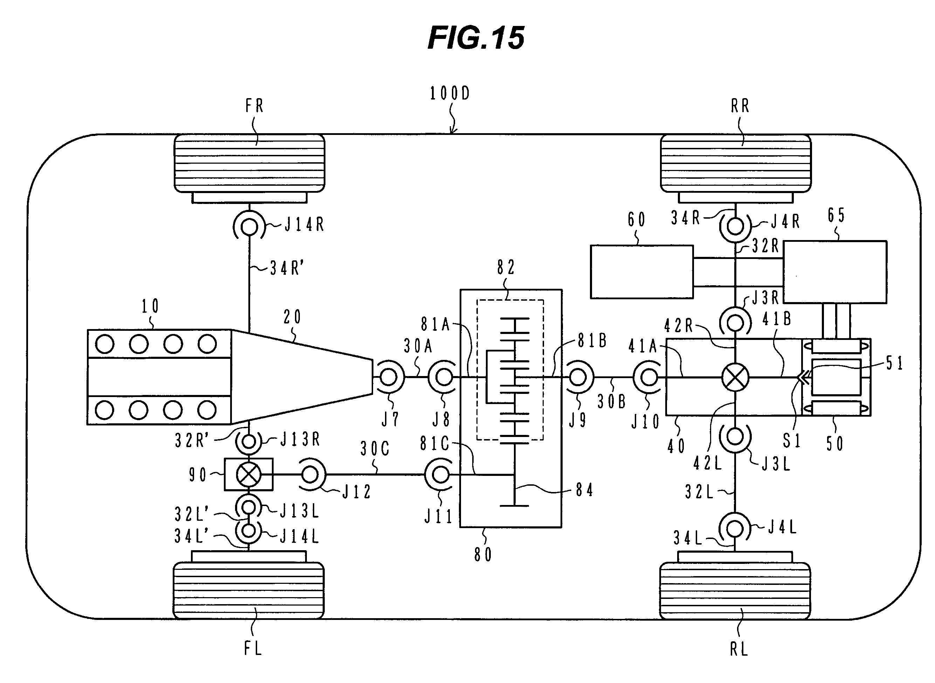

Next, with reference to Fig. 15, the following description is provided about the construction of a hybrid vehicle which carries thereon a vehicle drive device according to a fifth embodiment of the present invention.

Fig. 15 is a plan view showing the construction of the hybrid vehicle which carries thereon the vehicle drive device of this fifth embodiment. In Fig. 15, the same reference numerals as those in Fig. 1 represent the same portions as those in Fig. 1.

The vehicles shown in the examples of Fig. 1 and Figs. 12 to 14 are so-called FR2WD type vehicles wherein the internal combustion engine is disposed on the front side to drive rear wheels.

In contrast, the vehicle related to this fifth embodiment is a 4WD vehicle which carries a center differential 80 thereon to distribute the power of an internal combustion engine 10 to the front wheels FR and FL and the rear wheels RR and RL.

An output shaft of the transmission 20 and a propeller shaft 30A are connected together by a constant velocity joint J7. The propeller shaft 30A and an input shat 81A of the center differential 80 are connected together by a constant velocity joint J8.

The center differential 80 includes a planetary gear 82 and a gear 84. An input shaft 81A of the center differential 80 is connected to a planetary gear carrier of the planetary gear 82. A first output shaft 81B of the center differential 80 is connected to a sun gear of the planetary gear 82. A second output shaft 81C of the center differential 80 is connected to a ring gear of the planetary gear 82 through the gear 84.

The first output shaft 81B of the center differential 80 and a propeller shaft 30B are connected together by a constant velocity joint J9. The propeller shaft 30B and the driving force transducer 40 are connected together by a constant velocity joint J10. The second output shaft 81C of the center differential 80 and a propeller shaft 30C are connected together by a constant velocity joint J11. The propeller shaft 30C and a front-side differential gear 90 are connected together by a constant velocity joint J12.

Output shafts of the front-side differential gear 90 are connected to axles 34R' and 34L', respectively, through constant velocity joints J13R and J13L, connecting shafts 32R' and 32L', and constant velocity joints J14R and J14L.

Instead of the front-side differential gear 90, the driving force transducer 40 may be disposed, and an electric motor may be disposed on the opposite-to-propeller-shaft-side (i.e., on the vehicle front side).

According to this fifth embodiment as described above, since the electric motor is disposed on the opposite-to-propeller-shaft-side of the driving force transducer, an electric motor using a hollow shaft becomes unnecessary, which simplifies the parts construction and reduces the motor size.

Besides, since the driving force transducer and the electric motor are constituted separately from each other and the output shaft of the electric motor is connected to the input shaft of the driving force transducer through the spline bearing, only the electric motor can be removed, thus improving maintainability.

Moreover, since two electric motors are employed, it is possible to achieve centroid balance between the right and left, and it becomes possible to transmit the driving force separately to each of the right and left wheels, whereby turning performance can be improved.

Although in each of the above embodiments an internal combustion engine is used as the first drive source, the drive source is not limited to the internal combustion engine; another drive source (e.g., an electric motor) may also be used.

Although the driving force transducer 40 is of an integral construction having all of differential, shift and clutch functions, it may be divided into several portions on a function-by-function basis (differential gear, clutch, shift/clutch). A construction may also be adopted which does not use a clutch and a transmission and does not use a shift function and an accompanying rotation preventing function.

According to the above embodiments as described above, the propeller shaft and the electric motor are disposed so as not to interfere with each other, and even a smaller electric motor than in the prior art can afford equivalent performance. Besides, even when it is necessary to change the motor design, greater latitude with which the motor design is modified can be ensured because the interference with other products is diminished.

Moreover, since the electric motor is disposed on the side opposite to the propeller shaft (on the vehicle rear side), the motor installed position is more rearward than in the case of disposing the motor on the front side of the differential gear. Therefore, the front-rear weight balance with respect to the internal combustion engine, which is heavy, is improved.

Further, in traveling conditions wherein only one drive source is used as in engine running or EV running (running with a motor alone without using an internal combustion engine), it is possible to prevent accompanying rotation of the internal combustion engine and the electric motor by disposing a clutch capable of transferring and cutting off power between the propeller shaft and the differential gear and between the electric motor and the differential gear. By disposing the electric motor on the side opposite to the propeller shaft, it is possible to attain a simple structure because a clutch for the internal combustion engine and a clutch for the electric motor need not be disposed on a same side.

The above features and embodiments may be combined in any way partly or as a whole.

## Claims

1. A vehicle drive device mounted on a hybrid vehicle wherein power transmitted from a first drive source through a propeller shaft and power transmitted from a second drive source are distributed to right and left shafts through a differential gear to drive right and left wheels, said vehicle drive device comprising:
at least one electric motor which constitutes said second drive source; and
a connecting mechanism for connecting between an output shaft of said electric motor and an input shaft of said differential gear;
said electric motor being provided as a separate component from said differential gear and disposed in an area opposite to said propeller shaft and on a rear side of said differential gear.

2. The vehicle drive device according to claim 1, wherein the output shaft of said electric motor is disposed perpendicularly to a driving shaft extending from said differential gear.

3. The vehicle drive device according to claim 1 or 2, further comprising a first clutch, said first clutch being disposed between said propeller shaft and said differential gear and capable of transferring and cutting off power.

4. The vehicle drive device according to at least one of claim 1 to 3, further comprising a second clutch, said second clutch being disposed between said electric motor and said differential gear and capable of transferring and cutting off power.

5. The vehicle drive device according to at least one of claim 1 to 4, further comprising a reduction mechanism, said reduction mechanism being disposed between said electric motor and said differential gear to increase or decrease torque/revolution.

6. The vehicle drive device according to claim 5, wherein said reduction mechanism has a shifting function of changing a gear ratio.

7. The vehicle drive device according to at least one of claim 1 to 6, wherein said connecting mechanism is a spline bearing or a constant velocity joint.

8. A vehicle drive device mounted on a hybrid vehicle wherein power transmitted from a first drive source through a propeller shaft and power transmitted from a second drive source are distributed to right and left shafts through a differential gear to drive right and left wheels, said vehicle drive device comprising:
at least one electric motor which constitutes said second drive source; and
a connecting mechanism for connecting between an output shaft of said electric motor and an input shaft of said differential gear;
said electric motor being provided as a separate component from said differential gear and disposed on a rear side of said differential gear.

9. A vehicle drive device mounted on a hybrid vehicle wherein power transmitted from a first drive source through a propeller shaft and power transmitted from a second drive source are distributed to right and left shafts through a differential gear to drive right and left wheels, said vehicle drives device comprising:
at least one electric motor which constitutes said second drive source;
a connecting mechanism for connecting between an output shaft of said electric motor and an input shaft of said differential gear; and
a controller for controlling electric power fed from an on-board power supply and supplying it to said electric motor to control operation of the electric motor,
said electric motor being provided as a separate component from said differential gear and disposed on the opposite-to-propeller-shaft-side of said differential gear and more rearward in the vehicle than axles of said wheels.
